# EUROPEAN PATENT APPLICATION

(11) **EP 4 471 698 A1**
(43) Date of publication of application: **04.12.2024**
(21) Application number: 24164954.0
(22) Date of filing: 20.03.2024
(51) Int. Cl.: G06Q 20/20, G06Q 20/40, G07G 1/00, G07G 1/14

(54) **SETTLEMENT DEVICE AND METHOD FOR SETTLEMENT DEVICE**

(30) Priority: 30.05.2023 JP 2023088363
(71) Applicant: Toshiba TEC Kabushiki Kaisha, Tokyo 141-8562 (JP)
(72) Inventor: Fukuzawa, Ichiro, Tokyo, 141-8562 (JP)
(74) Representative: Bandpay & Greuter

(57) **Abstract**

According to an embodiment, a settlement device for handling payments for settling retail transactions includes a first interface to communicate with a change machine, a second interface to communicate with a selection receiving unit to receive an instruction to select a price payment method, and a processor. The processor perform settlement processing according to the selected price payment method received from the selection receiving unit, receives a payment suspension instruction via from the selection receiving unit to suspend the settlement processing for the transaction according to the selected price payment method, and controls the change machine to delay, upon the payment suspension instruction being received, repaying of any cash deposited into the change machine until after another selected price payment method is received from the selection receiving unit after the payment suspension instruction is received. The repaying may be delayed until the transaction is settled by the other payment method.

## Description

### FIELD

Embodiments described herein relate generally to a settlement device for settling retail transactions and a method therefor.

### BACKGROUND

In recent years, a settlement device (e.g., a settlement kiosk) at which a customer deposits money necessary for settlement of a transaction has been put into practical use. If cash is deposited into an automatic change machine by the customer, the settlement device of this type counts the deposited amount. If the deposited amount is equal to or more than the required price for settling the customer's transaction, the settlement device processes the payment to settle the transaction. If change back is necessary, the settlement device dispenses the change from the automatic change machine.

If there is a customer who desires to switch a payment method from cash to another method such as a credit card or electronic money after starting the depositing of the cash but before finalizing the settlement by cash, the settlement device of this type permits an operation for instructing the return of the settlement device to a state before the cash deposit. If the instruction to return the settlement device to the state before the cash deposit is input, the settlement device returns the cash already deposited from the automatic change machine. Thereafter, if the transaction price is paid by another payment method and finalized, the settlement device settles the transaction according to the other payment method. However, there is a concern about a fraudulent act of the customer at such a settlement device. For example, the customer may use the cash return option to make it appear as if the cash returned by the automatic change machine is change being dispensed for a completed (settled) transaction and then leave without actually settling the transaction.

### DISCLOSURE OF THE INVENTION

To this end, a settlement device and settlement method according to appended claims are provided whereby fraudulent activities such as leaving without settling a transaction can be provided.

### BRIEF DESCRIPTION OF THE DRAWINGS

FIG. 1 depicts a commodity sales system according to an embodiment.
FIG. 2 is a block diagram of a settlement device.
FIG. 3 depicts a main storage region formed in a main memory of a settlement device.
FIG. 4 is a block diagram for describing certain functions of a processor of a settlement device.
FIG. 5 is a flowchart of first information processing executed by a processor.
FIG. 6 is a flowchart of second information processing.
FIG. 7 is a flowchart of second information processing.
FIG. 8 is an example of a registration screen displayed on a touch panel of an input device.
FIG. 9 is an example of another registration screen displayed on a display of an input device.
FIG. 10 is an example of a subtotal screen displayed on a touch panel.
FIG. 11 is an example of a first notification screen.
FIG. 12 is an example of a second notification screen.
FIG. 13 is an example of a total screen displayed on a first touch panel of a settlement device.
FIG. 14 is a schematic diagram illustrating a transition example of information displayed in a second customer area of a total screen.
FIG. 15 is an example of a payment method selection screen displayed on a touch panel.
FIG. 16 is an example of a payment method selection screen displayed on a first touch panel.
FIG. 17 is an example of a store clerk operation-in-progress screen displayed on a second touch panel.
FIG. 18 is an example of a payment support screen displayed on a second touch panel.
FIG. 19 is an example of a payment check screen displayed on a second touch panel.
FIG. 20 is an example of a payment completion screen displayed on a first touch panel.
FIG. 21 is an example of a payment completion screen displayed on a second touch panel.
FIG. 22 is a block diagram illustrating certain functional aspects of a settlement device in a second embodiment.
FIG. 23 is a flowchart of second information processing executed by a processor.
FIG. 24 is an example of a repayment check screen displayed on a second touch panel.
FIG. 25 is a block diagram illustrating certain functional aspects of a settlement device in a third embodiment.
FIG. 26 is a flowchart of second information processing executed by a processor.
FIG. 27 is a flowchart of second information processing.
FIG. 28 is an example of a repayment check screen displayed on a second touch panel.

### DETAILED DESCRIPTION

An embodiment provides an improved settlement device and/or method that can better prevent a fraudulent act of a customer who may attempt to make deposited cash returned by an automatic change machine look as if transaction change back is being dispensed to permit leaving without settling a retail transaction or the like.

According to an embodiment, a settlement device for handling payments for settling customer purchase transactions includes a first interface to communicate with a change machine, a second interface to communicate with a selection receiving unit to receive an instruction to select a price payment method from a plurality of price payment methods, at least one of the plurality of price payments methods being cash payment, and a processor. The processor is configured to perform settlement processing for a transaction according to the selected price payment method received via the second interface from the selection receiving unit; receive a payment suspension instruction via the second interface from the selection receiving unit to suspend the settlement processing for the transaction according to the selected price payment method; and control the change machine via the first interface to delay, upon the payment suspension instruction being received, repaying of any cash deposited into the change machine until after another selected price payment method is received via the second interface from the selection receiving unit after the payment suspension instruction is received.

An embodiment representing a technological solution for providing a settlement device that can prevent a fraudulent act of a customer making cash dispensed by an automatic change machine look as if change is dispensed and then leaving without settling a transaction is explained below with reference to the drawings.

### [First Embodiment]

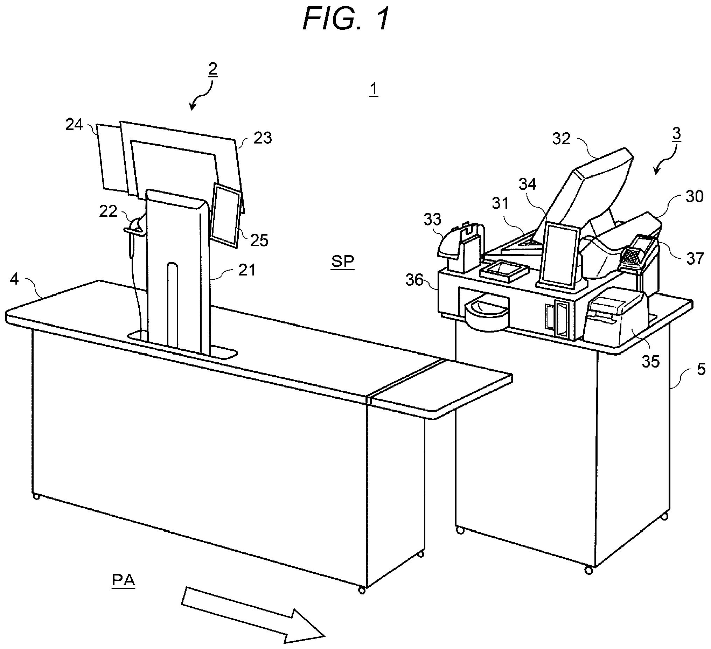

A first embodiment is explained with reference to FIGS. 1 to 21.

### [Explanation of a configuration of a commodity sales system]

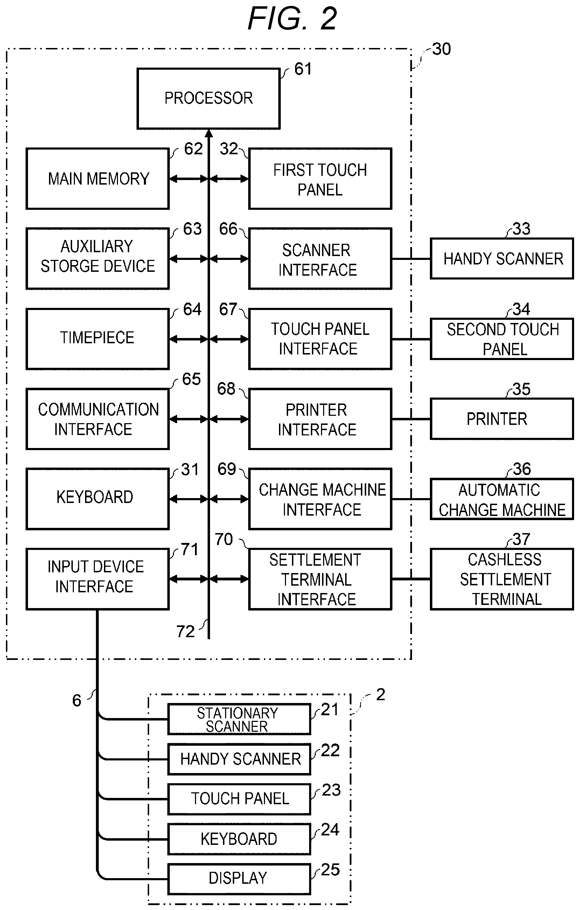

FIG. 1 is a schematic configuration diagram of a commodity sales system 1 according to an embodiment. The commodity sales system 1 includes an input device 2 and a settlement device 3. The input device 2 and the settlement device 3 are connected by a transmission cable 6 (see FIG. 2) such as a LAN (Local Ara Network) cable.

The input device 2 is attached to a checkout counter 4. The checkout counter 4 is disposed along a checkout lane PA on which a customer, who is a purchaser, moves in a direction of the arrow illustrated in FIG. 1. The input device 2 is attached to substantially the center of the top surface of the checkout counter 4. A space on an upstream side of the checkout lane PA is used as a space for placing a commodity (referred to as a "purchase commodity" in the following) before a commodity code of the purchase commodity is input for purchasing (registration). A space further on a downstream side of the checkout lane PA is used as a space for placing the now-registered purchase commodity after the commodity code has been input. The input device 2 is a device used for inputting the commodity code or the like. The commodity code may be attached to the commodity as barcode label or the like. The settlement device 3 is a device for storing, in a main memory 62, information concerning the purchase commodity, the commodity code and the like of which has been input by the input device 2. The storing of the information concerning the purchase commodity in the main memory 62 in this way is referred to as registration or commodity registration. The settlement device 3 is used for settling (payment) of a transaction based on the information registered in the main memory 62.

The input device 2 includes as input and output devices a stationary scanner 21, a handy scanner 22 (a handheld scanner 22), a touch panel 23, a keyboard 24, and a display 25. In the input device 2, the stationary scanner 21 is disposed to project upward from the top surface of the checkout counter 4. The handy scanner 22, the touch panel 23, the keyboard 24, and the display 25 are disposed around the stationary scanner 21.

Specifically, in the input device 2, the stationary scanner 21 is fixed to the top surface of the checkout counter 4. The stationary scanner 21 in this example is a vertical type and is fixed in place such that a barcode reading window is located on a surface on the opposite side of the checkout lane PA. In the input device 2, the handy scanner 22 is mounted to one side portion of the stationary scanner 21. The touch panel 23 is attached to an upper part of the stationary scanner 21 such that an operation panel surface of the touch panel 23 faces the same direction as the direction of the reading window of the stationary scanner 21. The keyboard 24 is attached to one side of the touch panel 23 such that a key surface of the keyboard 24 faces the same direction as the direction of the operation panel surface of the touch panel 23. Further, the display 25 is attached to one side of the stationary scanner 21 such that a display screen of the display 25 faces towards the checkout lane PA (. Note that the display 25 may be a touch panel.

A store clerk standing in a space SP on the opposite side of the checkout lane PA across the checkout counter 4 can operate the stationary scanner 21, the handy scanner 22, the touch panel 23, or the keyboard 24 and input information relating to a purchase commodity such as a commodity code, a purchase quantity, and a price-cut amount. At this time, the store clerk can check a commodity name, a unit price, and the like of the purchase commodity against the information displayed on the touch panel 23. The customer can also check the commodity name, the unit price, and the like of the purchase commodity against the information displayed on the display 25. If the customer presents a barcode of an electronic receipt ID that may be displayed on a smartphone or the like, the store clerk can read the barcode with the handy scanner 22. Consequently, data of the electronic receipt ID is input and a receipt indicating details of a commercial transaction is dispensed in the form of an electronic receipt.

The settlement device 3 includes a keyboard 31 and a first touch panel 32 integrated with a device main body 30. The settlement device 3 also includes a handy scanner 33, a second touch panel 34, a printer 35, an automatic change machine 36, and a cashless settlement terminal 37 externally attached to the device main body 30. The settlement terminal 3 is placed on the top surface of a register counter near the downstream end of the checkout counter 4. The settlement terminal 3 is across the checkout counter 4 opposite the checkout lane PA area.

The device main body 30 is placed on the register counter 5 such that a key surface of the keyboard 31 and an operation panel surface of the first touch panel 32 face towards the space SP where the store clerk stands. The handy scanner 33, the second touch panel 34, the printer 35, the automatic change machine 36, and the cashless settlement terminal 37 are disposed around the device main body 30. The handy scanner 33 is disposed in a position where the store clerk standing in the space SP can operate the handy scanner 33. The second touch panel 34 is disposed in a position where a customer standing in the checkout lane PA can view a display screen of the second touch panel 34. The printer 35 is disposed such that the customer standing in the checkout lane PA can easily receive a receipt.

The automatic change machine 36 is equipment providing a function of counting bills or coins deposited from a depositing port and calculating a deposited amount, sorting deposited cash for each of various possible denominations and storing the cash in a safe, and extracting bills or coins equivalent to a change due amount from the safe and dispensing the bills or the coins to a dispensing port. The automatic change machine 36 is disposed where the customer standing in the checkout lane PA can easily deposit money and receive dispensed change.

The cashless settlement terminal 37 is equipment specialized for processing cashless settlements such as a credit card settlement, an electronic money settlement, and/or a code settlement. The cashless settlement terminal 37 is disposed where the customer standing in the checkout lane PA can easily operate the cashless settlement terminal 37 when the customer performs a cashless settlement such as credit card settlement, electronic money settlement, and code settlement.

With the disposition of the devices explained above, the store clerk is an operator of the keyboard 31, the first touch panel 32, and the handy scanner 33. The customer is an operator of the second touch panel 34, the printer 35, the automatic change machine 36, and the cashless settlement terminal 37. That is, the first touch panel 32 functions as a display unit for store clerks that the store clerk can operate. The second touch panel 34 functions as a display unit for customers that the customer can operate.

In general, in a large retail store such as a super market or a home improvement center, a plurality of commodity sales systems 1 including the configuration explained above would be installed in parallel in a checkout place separate from a selling floor where commodities are displayed. On the other hand, in a small retail store such as a specialty store, just one commodity sales system 1 might sometimes installed in the store.

### [Explanation of a configuration of the settlement device]

FIG. 2 is a block diagram of the settlement device 3. As illustrated in FIG. 2, the settlement device 3 includes a processor 61, main memory 62, an auxiliary storage device 63, a timepiece 64 (clock), a communication interface 65, a scanner interface 66, a touch panel interface 67, a printer interface 68, a change machine (first) interface 69, a settlement terminal interface 70, and an input device interface 71 in the device main body 30 as components. The processor 61, the main memory 62, the auxiliary storage device 63, the timepiece 64, the communication interface 65, the scanner interface 66, the touch panel interface 67, the printer interface 68, the change machine interface 69, the settlement terminal interface 70, and the input device interface 71 are connected by a system transmission line 72. The system transmission line 72 is a transmission line including an address bus, a data bus, and a control signal line.

In the settlement device 3, the processor 61 and the other units are connected by the system transmission line 72. The keyboard 31 and the first touch panel 32 are connected via the system transmission line 72.

The processor 61 controls the units according to an operating system and/or application programs in order to implement the various functions of the settlement device 3. The processor 61 is, for example, a CPU (Central Processing Unit). The processor 61 can be a multicore processor including a plurality of processor cores and may be capable of executing a plurality of kinds of processing in parallel.

The main memory 62 includes a nonvolatile memory region and a volatile memory region. For example, the main memory 62 stores the operating system or the application programs in the nonvolatile memory region. The main memory 62 sometimes stores, in the nonvolatile or volatile memory region, data necessary for the processor 61 to execute processing for controlling the units. The main memory 62 uses the volatile memory region as a work area where data is rewritten as appropriate by the processor 61. The nonvolatile memory region is, for example, a ROM (Read Only Memory). The volatile memory region is, for example, a RAM (Random Access Memory).

The auxiliary storage device 63 may be an EEPROM (Electric Erasable Programmable Read-Only Memory), an HDD (Hard Disk Drive), or an SSD (Solid State Drive). The auxiliary storage device 63 stores data used by the processor 61 in performing various kinds of processing, data created by the processing in the processor 61, and the like. The auxiliary storage device 63 sometimes stores the application programs described above.

The timepiece 64 tracks the date and time. The processor 61 processes the date and the time provided by the timepiece 64 as a present date and time.

The communication interface 65 is an interface for performing data communication with a store server connected via a communication network. The store server is a computer for collecting and totalizing sales data of commodities processed by the settlement device 3. The store server stores a commodity master including commodity data such as commodity names and unit prices of the commodities sold in the store. The store server may also track overall sales, commodity stock levels (inventory), and the like of the store.

Each of the scanner interface 66, the touch panel interface 67, the printer interface 68, the change machine interface 69, and the settlement terminal interface 70 are interfaces for performing data communication with devices externally attached to the device main body 30. That is, the scanner interface 66 performs data communication with the handy scanner 33. The touch panel interface 67 performs data communication with the second touch panel 34. The printer interface 68 performs data communication with the printer 35. The change machine interface 69 performs data communication with the automatic change machine 36. The settlement terminal interface 70 performs data communication with the cashless settlement terminal 37.

The input device interface 71 is an interface for performing data communication with the input device 2 connected by the transmission cable 6. That is, the input device interface 71 performs data communication respectively with the stationary scanner 21, the handy scanner 22, the touch panel 23, the keyboard 24, and the display 25.

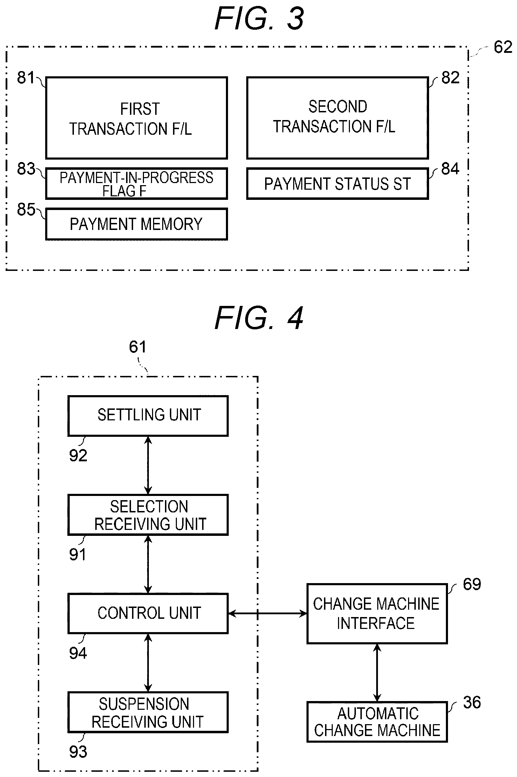

FIG. 3 is a schematic diagram illustrating a main storage region formed in the main memory 62. The settlement device 3 uses parts of the volatile storage region in the main memory 62 as regions of a first transaction file 81 ("first transaction F/L"), a second transaction file 82 ("second transaction F/L"), a flag memory 83 ("payment-in-progress flag F"), a status memory 84 ("payment status ST"), and a deposit memory 85 ("payment memory"). Both the first transaction file 81 and the second transaction file 82 are regions for storing sales data to be processed as one transaction. The sales data includes items such as a commodity code, a commodity name, a unit price, a purchase quantity, and a sales amount of a purchase commodity. The sales amount is an amount obtained by multiplying the commodity unit price by the commodity purchase quantity. The first transaction file 81 stores sales data relating to the purchase commodity from when input of the commodity code and the like of a transaction is started until the input of such data is ended for the transaction. The second transaction file 82 stores the sales data after the input of the commodity code and the like has ended until the transaction is settled. Specifically, the first transaction file 81 and the second transaction file 82 store information input from the stationary scanner 21, the handy scanner 22, the touch panel 23, or the keyboard 24 of the input device 2. For example, information such as a commodity codes, purchase quantities, and price-cut amounts for each commodity registered to be purchased by the customer. Additionally, information input via the keyboard 31 or the first touch panel 32 of the settlement device 3 such as a commodity code, a purchase quantity, and a price-cut amount relating to a purchase commodity may also be included.

The flag memory 83 is a region for storing a payment-in-progress flag F. The payment-in-progress flag F is one-bit data for identifying whether is the price for the registered commodities has been paid at the settlement device 3. In this embodiment, the payment-in-progress flag F value indicating that the price has been paid is "1" and the payment-in-progress flag F value indicating that the price has not been paid is "0".

The status memory 84 is a region for storing a payment status ST. The payment status ST represents a current payment mode. As the payment modes, there are a self-mode and a support mode. The self-mode is a mode in which the customer performs the payment operation by himself or herself. The support mode is a mode in which the store clerk intervenes in the payment operation. In this embodiment, the payment status ST value representing the self-mode is "10" and the payment status ST value representing the support mode is "20". The payment status ST before the price payment operation is started is "00".

The deposit memory 85 is a region for storing a deposit amount calculated by counting the coins and/or bills deposited into the automatic change machine 36.

### [Explanation of functions of the settlement device]

FIG. 4 is a block diagram illustrating certain functional aspects provided the processor 61 of the settlement device 3. As illustrated in FIG. 4, the processor 61 provides functions of a selection receiving unit 91, a settling unit 92, a suspension receiving unit 93, and a control unit 94.

The selection receiving unit 91 is for receiving an instruction to select a price payment method out of a plurality of kinds of price payment methods including cash payment. The selection receiving unit 91 receives, according to operation of the customer on the second touch panel 34, a selection of a price payment method. The selection receiving unit 91 may also receive, according to operation of the store clerk on the first touch a selection of a price payment method.

The settling unit 92 for settling a transaction according to completion of payment by the selected price payment method. For example, if cash equal to or more than a settlement amount is deposited to the automatic change machine 36, the settling unit 92 executes cash settlement processing. For example, if data of a valid credit card is read by the cashless settlement terminal 37, the settling unit 92 executes credit card settlement processing. For example, if electronic money having a balance (available funds) equal to or more than the amount due is read by the cashless settlement terminal 37, the settling unit 92 executes electronic money settlement processing. For example, if a barcode or a two-dimensional code for code settlement linked to a balance (available funds) equal to or more than the price is read by the cashless settlement terminal 37, the settling unit 92 executes code settlement processing. Since cash settlement processing, the credit card settlement processing, the electronic money settlement processing, and the code settlement processing is well-known, further explanation of the different settlement options is omitted.

The suspension receiving unit 93 for receiving an instruction to suspend the payment operation by the selected price payment method (received by the selection receiving unit 91). The suspension receiving unit 93 receives, according to operation of the customer on the second touch panel 34, an instruction to suspend the payment of the price.

The control unit 94 is for controlling the automatic change machine 36 via the change machine interface 69. That is, the control unit 94 controls the automatic change machine 36 not to repay, at a point in time when the payment suspension instruction is received by the suspension receiving unit 93, cash deposited to the automatic change machine 36 and repay the cash if the price is paid by a price payment method selected after the payment suspension instruction.

With the functions explained above, the processor 61 of the settlement device 3 acts as explained below. That is, if the payment of the price by the price payment method received by the selection receiving unit 91 is completed, the processor 61 settles the transaction with the settling unit 92. On the other hand, if the payment suspension instruction is received by the suspension receiving unit 93, the processor 61 does not repay, at that point in time, cash deposited to the automatic change machine 36. The processor 61 repays the cash if the price is paid by a price payment method selected after the payment suspension instruction. As explained above, it is only after the price is paid by another price payment method that the cash deposited into the automatic change machine 36 is returned. The deposited cash is not immediately repaid from the automatic change machine 36 in response to the payment suspension instruction.

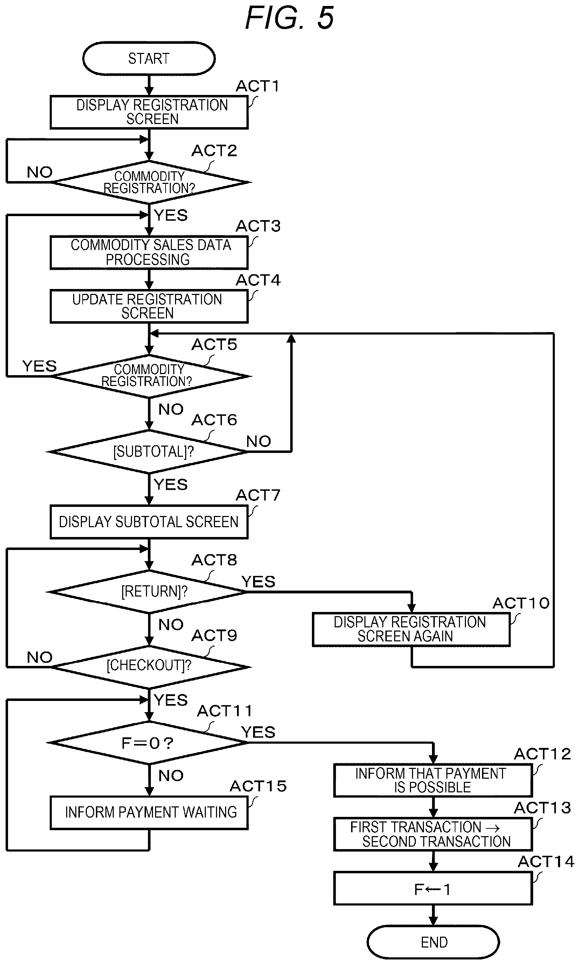

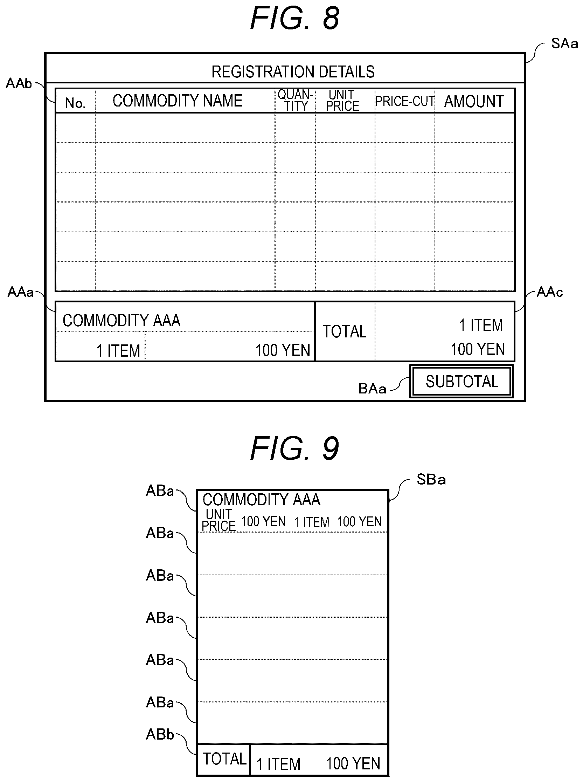

The functions of the selection receiving unit 91, the settling unit 92, the suspension receiving unit 93, and the control unit 94 are implemented by information processing executed by the processor 61 according to a job program. The procedure of information processing is explained with reference to flowcharts of FIGS. 5 to 7 and screen examples illustrated in FIGS. 8 to 21. Note that the procedure explained below is an example. The procedure can be changed as appropriate so long as the same action effects can be achieved. The screen examples are also examples. Content of text to be output, arrangement of images, typeface, and layouts of software keys, and the like can be changed as appropriate.

The job program is a kind of application program stored in the main memory 62 or the auxiliary storage device 63. A method of installing the job program in the main memory 62 or the auxiliary storage device 63 is not particularly limited. The job program can be installed in the main memory 62 or the auxiliary storage device 63 by recording the job program in a removable recording medium or distributing the job program by communication via a network. A format of the recording medium does not matter so long as the recording medium can store a program and can be read. The recording medium may be a CD-ROM, a memory card, or the like.

### [Explanation of information processing of the settlement device]

### <First information processing>

FIG. 5 is a flowchart illustrating first information processing executed by the processor 61 of the settlement device 3 according to the job program. After walking around the selling floor and collecting purchase commodities, the customer moves to the checkout place. The customer places the purchase commodities on the checkout counter 4 of a checkout lane PA not occupied. When the customer arrives at the checkout place, the store clerk standing in the space SP touches a start button of the touch panel 23. This operation is a command for an input start made via the input device 2. In other words, the operation is a command for a registration start. In response to the command, the processor 61 starts the first information processing according to the procedure illustrated in the flowchart of FIG. 5. In ACT 1, the processor 61 sets screens of the touch panel 23 and the display 25 as registration screens.

FIG. 8 is an example of a registration screen SAa displayed on the touch panel 23. The registration screen SAa is divided into a current area AAa, a details area AAb, and a total area AAc. The current area AAa is an area for displaying a commodity name, a purchase quantity, and a sales amount of the latest purchase commodity. The details area AAb is an area in which commodity names, purchase quantities, unit prices, price-cut amounts, and sales amounts of purchase commodities in the transaction are displayed in a list format. The total area AAc is an area where a total of the purchase quantities and a total of the sales amounts of the purchase commodities in the transaction are displayed. The registration screen SAa includes a subtotal button BAa. The subtotal button Baa is a software key. The subtotal button BAa is for instructing subtotal output for the purchase commodities registered by the settlement device 3 in the transaction.

FIG. 9 is an example of a registration screen SBa displayed on the display 25. In the registration screen SBa, the screen is divided into a plurality of rows (seven rows in the example illustrated in FIG. 9), the first six rows are each set details area ABa, and the last row is set the total area ABb. In the rows of the details area ABa, commodity names, unit prices, purchase quantities, and sales amounts of purchase commodities are displayed one by one. In the total area ABb, a sum total of the purchase quantities and a sum total of the purchase amounts are displayed.

The store clerk inputs, to the input device 2, information concerning a purchase commodity placed on the checkout counter 4. That is, the store clerk scans, with the stationary scanner 21 or the handy scanner 22 of the input device 2, a barcode attached to the purchase commodity. The barcode is scanned, whereby a commodity code of the purchase commodity is input to the settlement device 3 via the input device interface 71. Note that, if a barcode is not attached to the purchase commodity, the store clerk causes the touch panel 23 of the input device 2 to display a list of commodities lacking barcodes. The store clerk selects the purchase commodity out of the list. The commodity code of the purchase commodity without a barcode is input to the settlement device 3 via the input device interface 71.

Referring back to FIG. 5, the processor 61 proceeds to ACT 2. In ACT 2, the processor 61 waits for information necessary for registration of the purchase commodity to be input. When the commodity code of a purchase commodity is input from the input device 2 via the input device interface 71, the processor 61 determines that the information necessary for registration of the purchase commodity was input. The processor 61 proceeds from ACT 2 to ACT 3. In ACT 3, the processor 61 executes commodity sales data processing. This processing is processing for reading, from the commodity master, a commodity name, a unit price, and the like of the commodity specified by the input commodity code, generating sales data of the purchase commodity including the commodity code, the commodity name, the unit price, a purchase quantity, and a sales amount, and writing the sales data in the first transaction file 81, that is, registering the sales data.

The processor 61 proceeds to ACT 4. In ACT 4, the processor 61 updates the registration screen SAa and the registration screen SBa.

Concerning the registration screen SAa, the processor 61 displays, in the current area AAa, the commodity name, the purchase quantity, and the sales amount of the sales data written in the first transaction file 81. At this time, if sales data is displayed in the current area AAa, the processor 61 displays, in the details area AAb, a commodity name, a purchase quantity, a unit price, a price-cut amount, and a sales amount. The processor 61 displays, in the total area AAc, totals of purchase quantities and sales amounts of all sales data stored in the first transaction file 81.

Concerning the registration screen SBa, the processor 61 displays, in a first row of the details area ABa, the commodity name, the unit price, the purchase quantity, and the sales amount of the sales data written in the first transaction file 81. At this time, if the sales data is displayed in the first row of the details area ABa, the processor 61 sequentially shifts data in the first row and the subsequent rows to a second and the subsequent rows and then displays, in the first row, the sales data written in the first transaction file 81. The processor 61 displays, in the total area ABb, totals of purchase quantities and sales amounts of all sales data stored in the first transaction file 81.

The processor 61 proceeds to ACT 5. In ACT 5, the processor 61 checks whether information concerning the next purchase commodity was input to the input device 2. If information concerning the next purchase commodity was not input, in ACT 6, the processor 61 checks whether the subtotal button BAa was touched. If the subtotal button BAa was not touched, the processor 61 returns to ACT 5. As explained above, in ACT 5 and ACT 6, the processor 61 waits for information concerning the next purchase commodity to be input or the subtotal button BAa to be touched.

If information concerning a purchase commodity is input in the waiting state in ACT 5 and ACT 6, the processor 61 returns to ACT 3. The processor 61 executes the processing in ACT 3 and ACT 4 in the same manner as explained above.

The store clerk operates the stationary scanner 21, the handy scanner 22, or the touch panel 23 of the input device 2 and inputs information concerning purchase commodities placed on the checkout counter 4 item by item, whereby sales data of the purchase commodities is stored in the first transaction file 81. The registration screen SAa and the registration screen SBa are updated. When finishing the operation for inputting the information concerning the purchase commodity to the input device 2, the store clerk touches the subtotal button BAa.

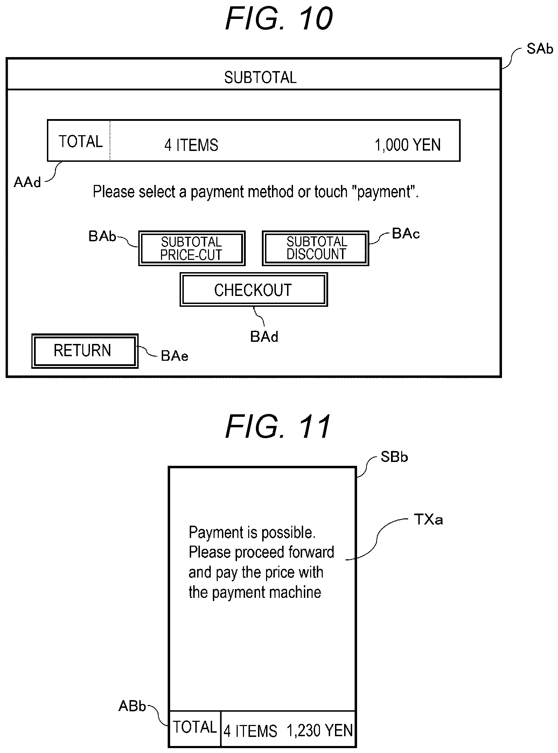

In the waiting state in ACT 5 and ACT 6, if the subtotal button BAa is touched by the store clerk, the processor 61 proceeds to ACT 7. In ACT 7, the processor 61 sets a screen of the touch panel 23 in the input device 2 as a subtotal screen SAb (see FIG. 10).

FIG. 10 is an example of the subtotal screen SAb displayed on the touch panel 23. The subtotal screen SAb includes a total area AAd where a total of purchase quantities of purchase commodities and a total of sales amounts in the transaction are displayed. The subtotal screen SAb includes a subtotal price-cut button BAb, a subtotal discount button BAc, a checkout button BAd, and a return button BAe. The buttons BAb, BAc, BAd, and BAe are software keys. The subtotal price-cut button BAb is for instructing a price-cut of a total amount. The subtotal discount button BAc is for instructing a discount of a total amount. The checkout button BAd is e for finishing input of purchase commodity information input. The return button BAe for instructing a return to purchase commodity information input (e.g., register more items in the transaction).

The store clerk checks whether a still unregistered purchase commodity remains on the checkout counter 4. If an unregistered purchase commodity, is present, the store clerk touches the return button BAe.

On the other hand, if no unregistered purchase commodity remains, the store clerk checks whether a transaction is a subtotal price-cut target transaction or a subtotal discount target transaction. For example, if the customer presents a coupon for a subtotal price-cut, the transaction is the subtotal price-cut target transaction. The store clerk touches the subtotal price-cut button BAb and inputs a price-cut amount with a ten key pad of the keyboard 24. A total amount is reduced (cut) by the operation explained above. The processing explained above is referred to as subtotal price-cut processing. Similarly, if the customer presents a coupon for a subtotal discount, the transaction is the subtotal discount target transaction. The store clerk touches the subtotal discount button BAc and inputs a discount rate with the ten key pad of the keyboard 24. The total amount is discounted by the operation explained above. The processing explained above is referred to as subtotal discount processing.

After confirming that an unregistered purchase commodity is not present and that neither a subtotal price-cut or a subtotal discount is necessary, the store clerk touches the checkout button BAd.

Referring back to FIG. 5, the processor 61 proceeds to ACT 8. In ACT 8, the processor 61 checks whether the return button BAe was touched. If the return button BAe was not touched, the processor 61 proceeds to ACT 9. In ACT 9, the processor 61 checks whether the checkout button BAd was touched. If the checkout button BAd was not touched, the processor 61 returns to ACT 8. As explained above, in ACT 8 and ACT 9, the processor 61 waits for the return button BAd to be touched or the checkout button BAd to be touched.

Note that, if the subtotal price-cut button BAb or the subtotal discount button BAc is touched in the waiting state in ACT 8 or ACT 9, the processor 61 performs the subtotal price-cut processing or the subtotal discount processing explained above. Thereafter, the processor 61 returns to the waiting state in ACT 8 and ACT 9.

If the return button BAd is touched by the store clerk in the waiting state in ACT 8 and ACT 9, the processor 61 proceeds from ACT 8 to ACT 10. In ACT 10, the processor 61 returns the screen of the touch panel 23 to the immediately preceding registration screen SAa. The processor 61 returns to the waiting state in ACT 5 and ACT 6. The store clerk only has to operate the stationary scanner 21, the handy scanner 22, or the touch panel 23 of the input device 2 and input the information concerning the purchase commodity that was not previously input.

If the checkout button BAd is touched by the store clerk in the waiting state in ACT 8 and ACT 9, the processor 61 proceeds from ACT 9 to ACT 11. In ACT 11, the processor 61 checks the payment-in-progress flag F. When payment operation has not been performed (completed) at the settlement device 3, the payment-in-progress flag F is reset to "0". After the payment-in-progress flag F is reset to "0", the processor 61 proceeds from ACT 11 to ACT 12. In ACT 12, the processor 61 sets the screen of the display 25 as a first notification screen SBb (see FIG. 11).

FIG. 11 is an example of the first notification screen SBb displayed on the display 25. The first notification screen SBb displays first text TXa together with information of the total area ABb in the registration screen SBa. The first text TXa is text for instructing the customer to move to a payment machine so the price can be paid. The customer moves to the payment machine, that is, the settlement device 3 and pays the price.

Referring back to FIG. 5, the processor 61 proceeds to ACT 13. In ACT 13, the processor 61 copies data stored in the first transaction file 81, that is, sales data of purchase commodities registered in the transaction to the second transaction file 82. In ACT 14, the processor 61 sets the payment-in-progress flag F of the flag memory 83 to "1". Then, the processor 61 ends the first information processing relating to a transaction with a first customer.

Subsequently, the processor 61 starts the first information processing relating to a transaction with a second customer. That is, the processor 61 executes the processing in ACT 1 and subsequent acts in the same manner as explained above. At this time, it could occur that the payment-in-progress flag F set to "1" in ACT 14 of the first information processing for the first customer was not reset to "0" at a point in time of ACT 11 of the first information processing for the second customer.

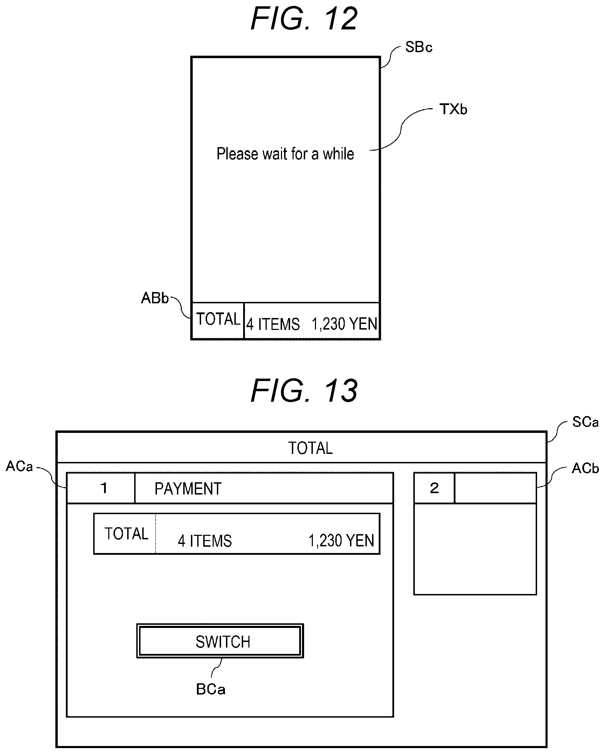

If the payment-in-progress flag F was set to "1" in ACT 11, the processor 61 proceeds from ACT 11 to ACT 15. In ACT 15, the processor 61 sets the screen of the display 25 as a second notification screen SBc (see FIG. 12).

FIG. 12 is an example of the second notification screen SBc displayed on the display 25. The second notification screen SBc displays second text TXb together with information of the total area ABb in the registration screen SBa. The second text TXb is text for instructing the customer to wait because a transaction price cannot be paid at this time. The second customer waits until payment of the transaction price becomes possible.

Referring back to FIG. 5, the processor 61 returns to ACT 11. In ACT 11, the processor 61 waits for the payment-in-progress flag F to be reset to "0". The payment-in-progress flag F is reset to "0" if settlement processing is finished in second information processing explained below. If the payment-in-progress flag F is reset to "0", the processor 61 proceeds from ACT 11 to ACT 12. The processor 61 executes the processing in ACT 12 to ACT 14 in the same manner as explained above. That is, the processor 61 displays the first notification screen SBb on the display 25. According to this display, the second customer moves in a direction in which the settlement device 3 is installed and pays a price.

The processor 61 copies data stored in the first transaction file 81 to the second transaction file 82. The processor 61 sets the payment-in-progress flag F to "1" and ends the first information processing for the second customer. Thereafter, the processor 61 subsequently repeatedly executes the first information processing for a third customer, a fourth customer, and the like.

### <Second information processing>

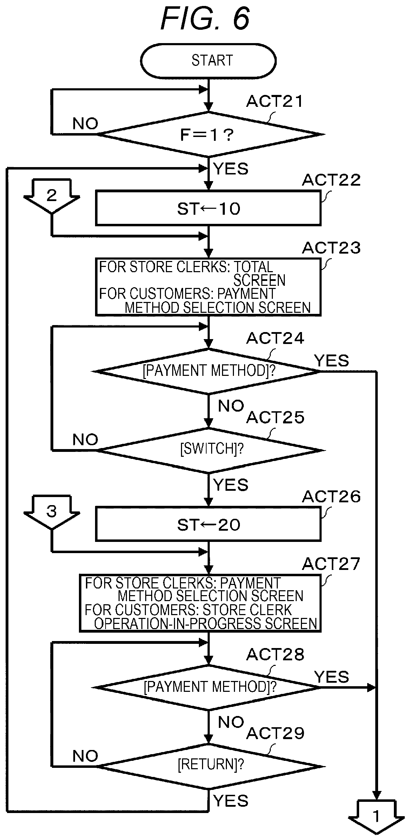

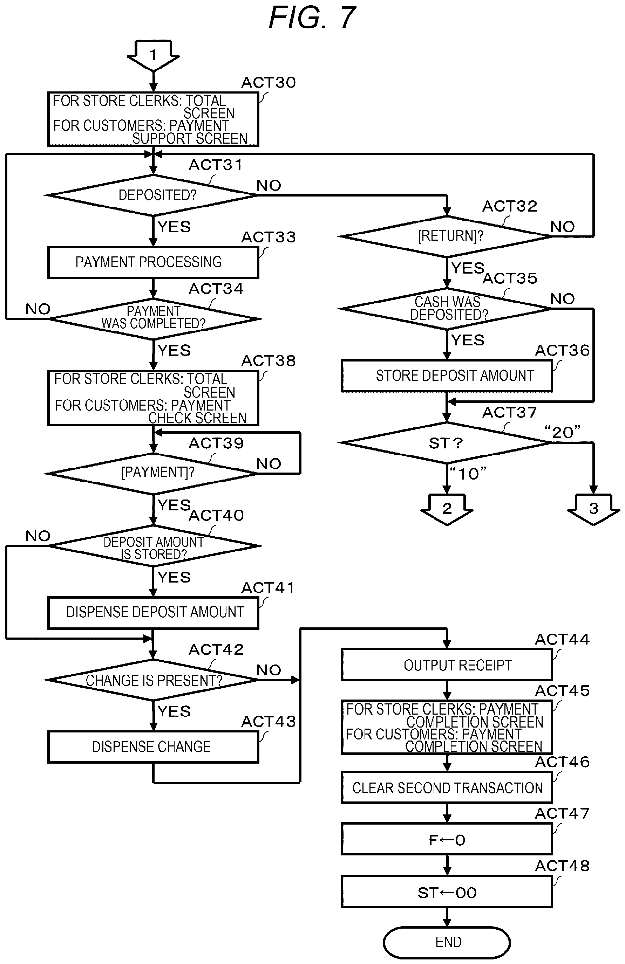

FIG. 6 and FIG. 7 are flowcharts illustrating second information processing executed by the processor 61 of the settlement device 3 according to the job program. The processor 61 executes the second information processing in parallel to the first information processing explained above.

In ACT 21, the processor 61 waits for the payment-in-progress flag F to be set to "1". Note that, in this waiting state, initial screens are displayed on the first touch panel 32 and the second touch panel 34. Contents of the initial screens are not particularly limited. For example, the initial screen displayed on the first touch panel 32 is a screen having the same layout as a layout of a total screen SCa explained below. However, no information is displayed on the initial screen. The initial screen displayed on the second touch panel 34 is a screen on which text such as "Welcome" or an image is displayed. Alternatively, nothing may be displayed on the initial screen.

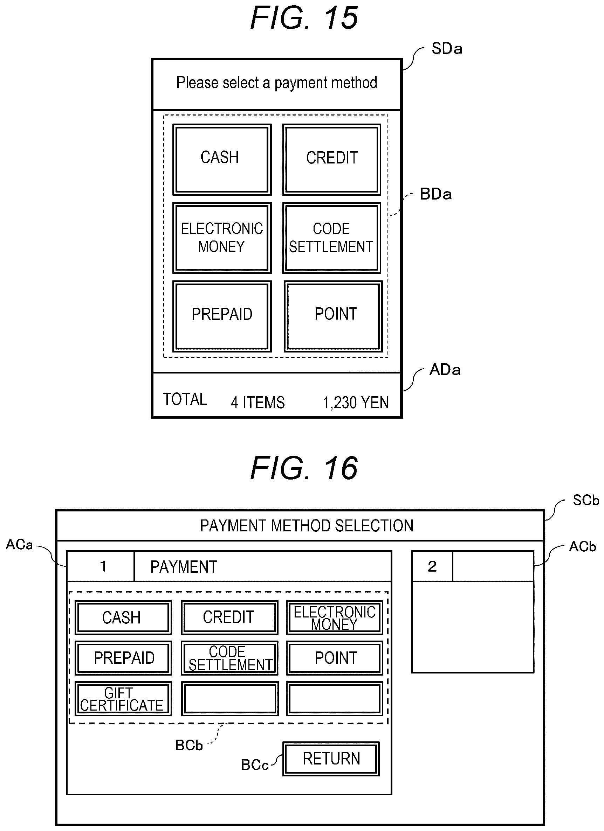

If the payment-in-progress flag F is set to "1" in ACT 14 of the first information processing, the processor 61 proceeds from ACT 21 to ACT 22. In ACT 22, the processor 61 sets the payment status ST to "10". In ACT 23, the processor 61 sets a screen of the first touch panel 32 to be the total screen SCa (see FIG. 13) and sets a screen of the second touch panel 34, as a payment method selection screen SDa (see FIG. 15).

FIG. 13 is an example of the total screen SCa displayed on the first touch panel 32. The total screen SCa includes a first customer area ACa and a second customer area ACb. The first customer area ACa is an area for displaying information concerning the first customer who is about to pay a price. A total number of items and a total amount of the first customer are displayed in the first customer area ACa. That is, a total of purchase quantities and a total of sales amounts calculated based on the sales data of the purchase commodities stored in the second transaction file 82 are displayed in the first customer area ACa. A switching button BCa is displayed in the first customer area ACa. The switching button BCa is a software key. The switching button BCa is for declaring that the store clerk intervenes in payment operation.

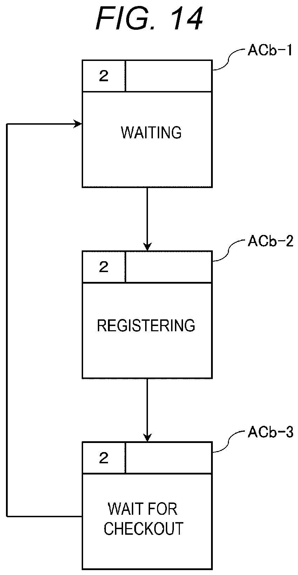

The second customer area ACb is an area for displaying information concerning the second customer. An example of the information displayed in the second area ACb is illustrated in FIG. 14. FIG. 14 is a schematic diagram illustrating a transition example of the information displayed in the second customer area ACb.

While information input for a commodity to be purchased by the second customer has not started yet at the input device 2, "waiting" is displayed, for example, as illustrated in a second customer area ACb-1. If the information input for the commodity to be purchased by the second customer has started, "registering" is displayed as illustrated in a second customer area ACb-2. After the information input for the commodity to be purchased by the second customer is completed, "waiting for checkout" is displayed, for example, as illustrated in a second customer area ACb-3. Thereafter, if checkout for the first customer has completed and shifted to checkout for the second customer, the display returns to "waiting" as illustrated in the second customer area ACb-1. Note that, in some examples, nothing might be displayed in the second customer area ACb - 1.

FIG. 15 is an example of the payment method selection screen SDa displayed on the second touch panel 34. The payment method selection screen SDa includes a payment method selection button group BDa. The payment method selection button group BDa includes a cash button, a credit button, an electronic money button, a code settlement button, a prepaid button, and a point button. All of the cash button, the credit button, the electronic money button, the prepaid button, and the point button are software keys.

The payment method selection screen SDa includes a total area ADa. A total number of items and a total amount of a customer about to make payment are displayed in the total area ADa. That is, a total of purchase quantities and a total of sales amounts calculated based on the sales data of the purchase commodities stored in the second transaction file 82 are displayed in the total area ADa.

The customer touches a button corresponding to a desired payment method out of the payment method selection button group BDa. For example, a customer desiring to pay by cash touches the cash button. A customer desiring to pay by a credit card touches the credit button. A customer desiring to pay by electronic money touches the electronic money button. A customer desiring to pay by code settlement touches the code settlement button. A customer desiring to pay by a prepaid card touches the prepaid button. A customer desiring to pay by a cumulative points touches the point button.

Referring back to FIG. 6, the processor 61 proceeds to ACT 24. In ACT 24, the processor 61 checks whether one button of the payment method selection button group BDa displayed on the payment method selection screen SDa was touched. If a button of the payment method selection button group BDa was not touched, the processor 61 proceeds to ACT 25. In ACT 25, the processor 61 checks whether the switching button BCa displayed on the total screen SCa was touched. If the switching button BCa of the total screen SCa was not touched either, the processor 61 returns to ACT 24. As explained above, in ACT 24 and ACT 25, the processor 61 waits for a button of the payment method selection button group BDa in the payment method selection screen SDa to be touched or the switching button BCa of the total screen SCa to be touched.

If a button of the payment method selection button group BDa is touched by the customer in the waiting state in ACT 24 and ACT 25, the processor 61 proceeds from ACT 24 to ACT 30 in FIG. 7. Processing in ACT 30 and subsequent acts is explained below.

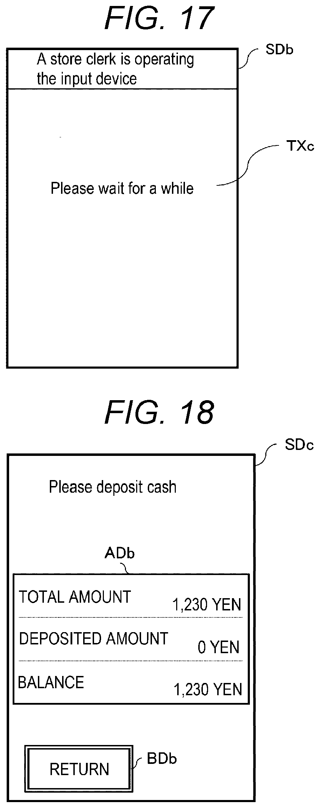

On the other hand, if the switching button BCa is touched by the store clerk in the waiting state in ACT 24 and ACT 25, the processor 61 proceeds from ACT 25 to ACT 26. In ACT 26, the processor 61 sets the payment status ST to "20". In ACT 27, the processor 61 sets the screen of the first touch panel 32 to be a payment method selection screen SCb (see FIG. 16) and sets the screen of the second touch panel 34 to be a store clerk operation-in-progress screen SDb (see FIG. 17).

FIG. 16 is an example of the payment method selection screen SCb displayed on the first touch panel 32. In the payment method selection screen SCb, a payment method selection button group BCb and a return button BCc are disposed in the first customer area ACa of the total screen SCa. The second customer area ACb of the total screen SCa is displayed in the same manner on the payment method selection screen SCb.

The payment method selection button group BCb includes a gift certificate button in addition to the cash button, the credit button, the electronic money button, the code settlement button, the prepaid button, and the point button. The gift certificate button is also a software key. If a price is paid by a gift certificate, the store clerk needs to intervene in order to check validity of the gift certificate. Therefore, the gift certificate button is not included in the payment method selection screen SDa of the second touch panel 34, the operator of which is the customer. However, the gift certificate button is included in the payment method selection screen SCb of the first touch panel 32, the operator of which is the store clerk. The return button BCc is a software key. The return button BCc is for declaring to return the payment method selection screen SCb to the immediately preceding screen, that is, the total screen SCa.

FIG. 17 is an example of the store clerk operation-in-progress screen SDb displayed on the second touch panel 34. As illustrated in FIG. 17, third text TXc for notifying the customer that the store clerk is in operation is displayed on the store clerk operation-in-progress screen SDb. Note that an image indicating that the store clerk is busy may be displayed instead of the third text TXc. Alternatively, the third text TXc and such an image may be displayed together. In short, it is sufficient if the customer can be notified that the store clerk is presently "in operation" or busy.

Referring back to FIG. 6, the processor 61 proceeds to ACT 28. In ACT 28, the processor 61 checks whether a button of the payment method selection button group BCb displayed on the payment method selection screen SCb was touched. If a button of the payment method selection button group BCb was not touched, the processor 61 proceeds to ACT 29. In ACT 29, the processor 61 checks whether the return button BCc of the payment method selection screen SCb was touched. If the return button BCc was not touched either, the processor 61 returns to ACT 28. As explained above, in ACT 28 and ACT 29, the processor 61 waits for a button of the payment method selection button group BCb to be touched or the return button BCc to be touched.

If a button of the payment method selection button group BCb is touched by the store clerk in the waiting state in ACT 28 and ACT 29, the processor 61 proceeds from ACT 28 to ACT 30 in FIG. 7. Processing in ACT 30 and subsequent acts is explained below.

In contrast, if the return button BCc is touched by the store clerk in the waiting state in ACT 28 and ACT 29, the processor 61 returns from ACT 29 to ACT 22. That is, the processor 61 sets the payment status ST to "10". The processor 61 sets the screen of the first touch panel 32 as the total screen SCa and sets the screen of the second touch panel 34 as the payment method selection screen SDa. The processor 61 waits for a button of the payment method selection button group BDa in the payment method selection screen SDa to be touched or the switching button BCa of the total screen SCa to be touched.

If a button of the payment method selection button group BDa displayed on the second touch panel 34 is touched by the customer in ACT 24 or a button of the payment method selection button group BCb displayed on the first touch panel 32 is touched by the store clerk in ACT 28 as explained above, the processor 61 proceeds to ACT 30 in FIG. 7. In ACT 30, the processor 61 sets the screen of the first touch panel 32 to be the total screen SCa (see FIG. 13) and sets the screen of the second touch panel 34 to be a payment support screen SDc (see FIG. 18).

FIG. 18 is an example of the payment support screen SDc displayed on the second touch panel 34. FIG. 18 illustrates the payment support screen SDc displayed if the cash button of the payment method selection button group BDa or the payment method selection button group BCb is touched. The payment support screen SDc includes a change machine information area ADb. A return button BDb is disposed on the payment support screen SDc.

A total amount, a deposited amount, that is, an amount of cash deposited to the automatic change machine 36, a balance obtained by subtracting the deposited amount from the total amount are displayed in the change machine information area ADb. The return button BDb is a software key. The return button BDb is for instructing to suspend payment by a selected payment method and return the settlement device 3 to a state before the payment method selection.

Referring back to FIG. 7, the processor 61 proceeds to ACT 31. In ACT 31, the processor 61 checks whether a price was deposited. If the price was not deposited, the processor 61 proceeds to ACT 32. In ACT 32, the processor 61 checks whether the return button BDb was touched. If the return button BDb was not touched, the processor 61 returns to ACT 31. As explained above, in ACT 31 and ACT 32, the processor 61 waits for a transaction price to be deposited or the return button BDb to be touched.

A customer who selected cash payment deposits cash to the automatic change machine 36. A customer who selected credit card payment causes a reader of the cashless settlement terminal 37 to read data of a credit card. A customer who selected code settlement payment causes a scanner of the cashless settlement terminal 37 to read a barcode for code settlement or a two-dimensional data code. A customer desiring to use a prepaid card payment causes the reader of the cashless settlement terminal 37 to read data of a prepaid card. A customer desiring to use a points payment causes the reader of the cashless settlement terminal 37 to read data of a point card. After the payment operation is successfully performed, the processor 61 determines in ACT 31 that the price was deposited.

The processor 61 then proceeds from ACT 31 to ACT 33. In ACT 33, the processor 61 executes payment processing. For example, if the cash payment was selected, the processor 61 deducts the amount of cash deposited to the automatic change machine 36 from the total amount. If the credit card payment was selected, the processor 61 authenticates a credit card. If the electronic money payment was selected, the processor 61 deducts the total amount from the balance of electronic money. If the code settlement payment was selected, the processor 61 deducts the total amount from the balance of code settlement. If the prepaid card payment was selected, the processor 61 deducts the total amount from the balance of a prepaid card. If the points payment was selected, the processor 61 deducts an equivalent point amount to total amount from a an accumulated or available points balance.

The processor 61 proceeds to ACT 34. In ACT 34, the processor 61 determines whether the payment was completed. For example, if the amount of the cash deposited to the automatic change machine 36 was insufficient for the total amount, the processor 61 determines that the payment is incomplete. Similarly, if failing in authenticating the credit card or if the balance of the electronic money, the code settlement, the prepaid card, the cumulative point, or the like is insufficient for the total amount, the processor 61 determines that the payment is incomplete. If the payment is incomplete, the processor 61 returns to ACT 31. In ACT 31 and ACT 32, the processor 61 waits for payment to be made again or the return button BDb to be touched.

In a state in which the payment is incomplete, that is, in the waiting state in ACT 31 and ACT 32, the customer can change the payment method to another method. For example, if the cash payment was selected but cash on hand is insufficient, the customer can change the payment method to a payment method other than the cash. The customer desiring to change the payment method to another payment method touches the return button BDb.

If the return button BDb is touched by the customer in the waiting state in ACT 31 and ACT 32, the processor 61 proceeds from ACT 32 to ACT 35. In ACT 35, the processor 61 checks whether the return button BDb was touched after the cash was deposited to the automatic change machine 36. If the return button BDb was touched after the cash was deposited to the automatic change machine 36, the processor 61 proceeds to ACT 36. In ACT 36, the processor 61 stores the amount of the cash deposited to the automatic change machine 36, a so-called deposit amount in the deposit memory 85. If cash was not deposited to the automatic change machine 36 and the return button BDb was touched, the processor 61 skips the processing in ACT 36.

After executing or skipping the processing in ACT 36, the processor 61 proceeds to ACT 37. In ACT 37, the processor 61 checks the status ST. Note that, at this point in time, the status ST is "10" or "20".

If the status ST is "10", the processor 61 returns to ACT 23 in FIG. 6. That is, the processor 61 sets the screen of the first touch panel 32 to be the total screen SCa (see FIG. 13) and sets the screen of the second touch panel 34 to be the payment method selection screen SDa (see FIG. 15). As explained above, if the customer touches the return button BDb when the status ST is "10", the payment method selection screen SDa is displayed on the second touch panel 34. The customer only has to touch a button of a desired payment method out of the payment method selection button group BDa again.

In contrast, if the status ST is "20", the processor 61 returns to ACT 27 in FIG. 6. That is, the processor 61 sets the screen of the first touch panel 32 to be the payment method selection screen SCb (see FIG. 16) and sets the screen of the second touch panel 34 to be the store clerk operation-in-progress screen SDb (see FIG. 17). As explained above, if the customer touches the return button BDb if the status ST is "20", the payment method selection screen SCb is displayed on the first touch panel 32. The store clerk only has to touch the button of the payment method desired by the customer out of the payment method selection button group BCb again.

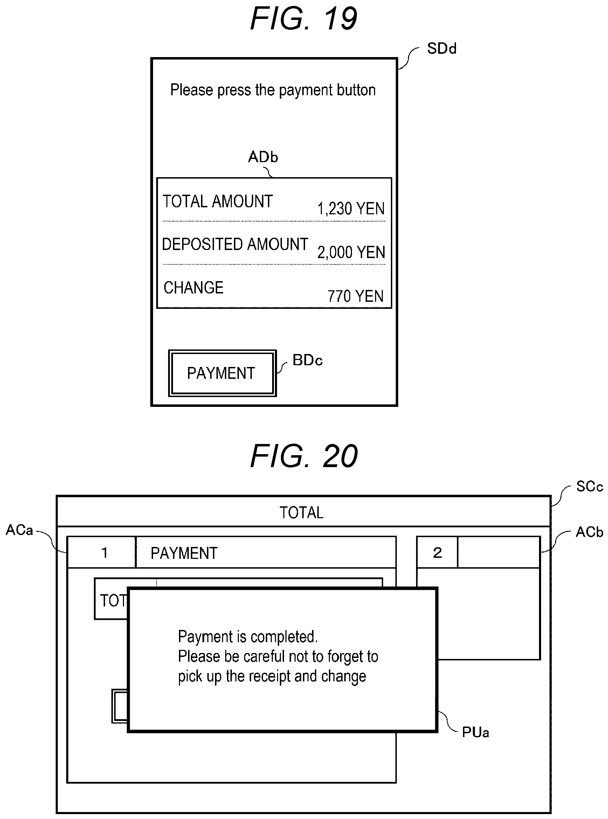

The processor 61 proceeds to ACT 38. In ACT 38, the processor 61 sets the screen of the first touch panel 32 to be the total screen SCa (see FIG. 13) and sets the screen of the second touch panel 34 to be a payment check screen SDd (see FIG. 19).

FIG. 19 is an example of the payment check screen SDd displayed on the second touch panel 34. FIG. 19 illustrates the payment check screen SDd displayed if the cash button of the payment method selection button group BDa or the payment method selection button group BCb is touched. The payment check screen SDd includes the change machine information area ADb. In the change machine information area ADb, a difference obtained by subtracting the deposited amount from the total amount is displayed as a balance on the payment support screen SDc but a difference obtained by subtracting the total amount from the deposited amount is displayed as a change amount on the payment check screen SDd. A payment button BDc is disposed on the payment check screen SDd. The return button DBb disposed on the payment support screen SDc is not disposed on the payment support screen SDc. The payment button BDc is indicating that the payment is completed. The customer touches the payment button BDc after payment is finished/completed.

Referring back to FIG. 7, the processor 61 proceeds to ACT 39. In ACT 39, the processor 61 waits for the payment button BDc to be touched. If the payment button BDc is touched by the customer, the processor 61 proceeds to ACT 40. In ACT 40, the processor 61 checks whether a deposit amount was stored. If a deposit amount was stored in the processing in ACT 36, the processor 61 proceeds to ACT 41. In ACT 41, the processor 61 controls the automatic change machine 36 such that cash equivalent to the stored deposit amount is dispensed. If a deposit amount was not stored in the processing in ACT 36, the processor 61 skips the processing in ACT 41.

After executing or skipping the processing in ACT 41, the processor 61 proceeds to ACT 42. In ACT 42, the processor 61 checks whether a requirement for change ("change due") is present. If a requirement for change is present because the cash payment was selected as the payment method and cash of an amount exceeding the total amount was deposited to the automatic change machine 36, the processor 61 proceeds to ACT 43. In ACT 43, the processor 61 controls the automatic change machine 36 such that cash equivalent to a change amount is dispensed. If change is not present, the processor 61 skips the processing in ACT 43.

After executing or skipping the processing in ACT 43, the processor 61 proceeds to ACT 44. In ACT 44, the processor 61 controls output of a receipt. That is, the processor 61 generates, based on sales data and the like stored in the second transaction file 82, receipt data indicating details of a commercial transaction. The processor 61 outputs the receipt data to the printer 35. Consequently, the printer 35 operates and a paper receipt is printed and dispensed. Note that, if an electronic receipt ID was supplied to the input device 2, the processor 61 transmits the receipt data to an electronic receipt server together with the electronic receipt ID. Consequently, the customer can acquire the receipt in a form of an electronic receipt by operating a smartphone or the like.

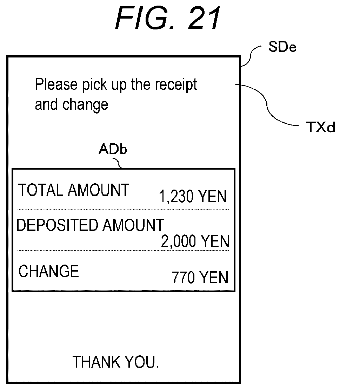

The processor 61 proceeds to ACT 45. In ACT 45, the processor 61 sets the screen of the first touch panel 32 to be a payment completion screen SCc (see FIG. 20) and sets the screen of the second touch panel 34 to be a payment completion screen SDe (see FIG. 21).

FIG. 20 is an example of the payment completion screen SCc displayed on the first touch panel 32. In the payment completion screen SCc, a pop-up window PUa for notifying the store clerk that the payment was completed is displayed over the total screen SCa. When the pop-up window PUa is displayed, the store clerk recognizes that the payment of the customer is completed at the settlement device 3.

FIG. 21 is an example of the payment completion screen SDe displayed on the second touch panel 34. FIG. 21 illustrates the payment completion screen SDe displayed if the cash button of the payment method selection button group BDa or the payment method selection button group BCb is touched. The payment completion screen SDe displays, together with the change machine information area ADb, fourth text TXd for informing the customer not to forget to pick up the receipt and the change. Note that, if the receipt is dispensed as an electronic receipt, the fourth text TXd can be changed to, for example, "Please pick up the change. Please check for an electronic receipt". If a paper receipt is dispensed from the printer 35, the customer receives the paper receipt. If cash or the change is dispensed from the automatic change machine 36, the customer receives the cash or change.

Referring back to FIG. 7, the processor 61 proceeds to ACT 46. In ACT 46, the processor 61 clears the second transaction file 82. In ACT 47, the processor 61 resets the payment-in-progress flag F to "0". Further, in ACT 48, the processor 61 sets the payment status ST to "00". Then, the processor 61 ends the second information processing. Consequently, price payment of the first customer is processed in the settlement device 3. If the payment-in-progress flag F is set to "1" in ACT 14 in FIG. 5 again, the processor 61 repeatedly executes the second information processing explained above. Consequently, price payment of the second customer is processed in the settlement device 3. Thereafter, price payment of a third customer, a fourth customer, and the like is processed in order in the settlement device 3.

The processor 61 implements the function of the selection receiving unit 91 with the processing in ACT 23 and ACT 24 or ACT 27 and ACT 28. The processor 61 implements the function of the settling unit 92 with the processing in ACT 33 to ACT 45. The processor 61 implements the function of the suspension receiving unit 93 with the processing in ACT 32. The processor 61 implements the function of the control unit 94 with the processing in ACT 35, ACT 36, ACT 40, and ACT 41.

### [Explanation of action effects of the settlement device]

For example, if a customer of a transaction, a settlement amount of which is a price 1,230 yen of a purchase commodity, operates the payment method selection screen SDa displayed on the second touch panel 34 and selects cash as a price payment method, the screen of the second touch panel 34 transitions from the payment method selection screen SDa to the payment support screen SDc at a cash payment time. Here, if the customer touches the return button BDb of the payment support screen SDc after depositing a 100-yen coin to the automatic change machine 36, the screen of the second touch panel 34 returns from the payment support screen SDc to the payment method selection screen SDa. At this time, the 100-yen coin deposited by the customer is not repaid from the automatic change machine 36, but the 100 yen value is stored in the deposit memory 85 as a deposit amount.

If the 100-yen coin were dispensed from the automatic change machine 36 simply when the screen of the second touch panel 34 returns from the payment support screen SDc to the payment method selection screen SDa, the customer might collect the 100-yen coin at this time. The actions of the customer in this case will appear to be the same as when change is dispensed from the automatic change machine 36 at the end of a settled transaction. Therefore, it may be difficult to detect that the customer commits a fraudulent act of leaving without settling a transaction after making cash dispensed by the automatic change machine 36 look as if transaction change has been dispensed. The store clerk might not notice because the store clerk is operating the input device 2. In the present embodiment, the fraudulent act can be prevented because cash is not dispensed from the automatic change machine 36 when the screen of the second touch panel 34 returns from the payment support screen SDc to the payment method selection screen SDa.

The customer, after touching the return button BDb, must navigate the payment method selection screen SDa and select a price payment method other than the cash (for example, electronic money payment). The customer must cause the reader of the cashless settlement terminal 37 to read data of an electronic money medium. At this time, if the available balance of the electronic money is 1,230 yen or more, electronic money settlement processing is executed. As a result, since the screen of the second touch panel 34 transitions from a payment support screen at an electronic money payment time to a payment check screen at an electronic money payment time, the customer touches the payment button BDc. Consequently, the transaction with the customer is settled by the price payment method selected after a payment suspension instruction (operation of the return button BDb). At this time, cash/coins equal to the deposit amount 100 yen value stored in the deposit memory 85 is dispensed from the automatic change machine 36 according to the touch of the payment button BDc. The customer can collect the cash previously deposited to the automatic change machine 36.

Incidentally, once the payment of the price is completed and the screen of the second touch panel 34 transitions to the payment check screen SDd, the return button BDb is not displayed anymore. That is, the return button BDb is disabled. Therefore, it is also possible to surely prevent a fraudulent act of operating the return button BDb after the payment of the price is completed, causing the automatic change machine 36 to repay the deposited cash, making the cash look as if change is dispensed, and leaving without settling the transaction.

### [Second Embodiment]

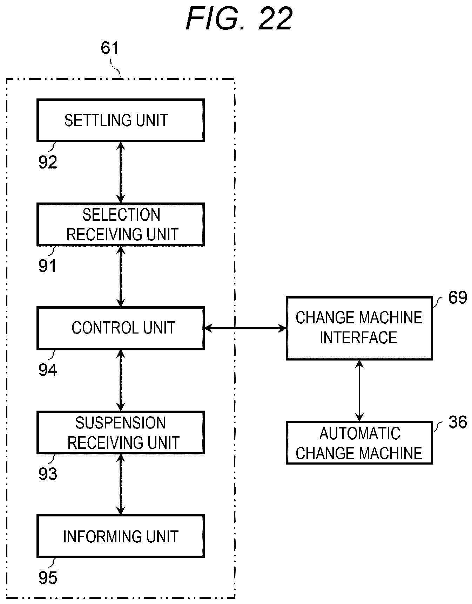

Subsequently, a second embodiment is explained with reference to FIGS. 22 to 24.

Note that, in the second embodiment, since explanation of a configuration of the commodity sales system 1 and explanation of a configuration of the settlement device 3 are the same as the explanation in the first embodiment, FIGS. 1 and 2 are referred to as they are and the explanation is omitted here.

### [Explanation of functions of the settlement device]

FIG. 22 is a block diagram illustrating certain functional aspects of the processor 61 of the settlement device 3 in the second embodiment. As illustrated in FIG. 22, the processor 61 provides functions of an informing unit 95 in addition to those of the selection receiving unit 91, the settling unit 92, the suspension receiving unit 93, and the control unit 94.

The informing unit 95 informs, when a payment suspension instruction is received by the suspension receiving unit 93, that cash deposited to the automatic change machine 36 will not be repaid until the transaction price is paid by another price payment method selected after the payment suspension instruction. The informing unit 95 causes the second touch panel 34 to display that cash deposited to the automatic change machine 36 will not be repaid until the amount due is paid by another price payment method and informs a customer to this effect. For example, if the settlement device 3 includes a voice output function, the informing unit 95 may output voice indicating that cash deposited to the automatic change machine 36 will not be repaid until after the amount due is paid by another price payment method.

Note that the function of the informing unit 95 can also be implemented by the information processing executed by the processor 61 according to the job program.

### [Explanation of information processing of the settlement device]

In the second embodiment, the first information processing executed by the processor 61 of the settlement device 3 is the same as the first information processing in the first embodiment. The second information processing is the same as the first embodiment up to selection of any payment method by operation of the payment method selection screen SDa displayed on the second touch panel 34 or the payment method selection screen SCb displayed on the first touch panel 32. Therefore, FIGS. 5 and 6 are referred to as they are and explanation of the first information processing and the second information processing is omitted here.

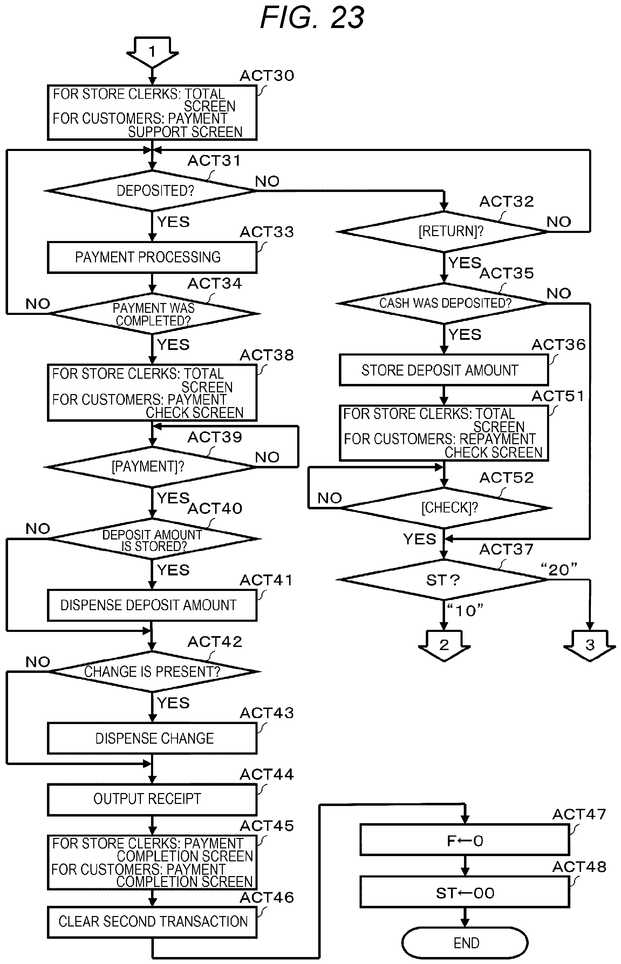

FIG. 23 is a flowchart illustrating a procedure of second information processing executed by the processor 61 after any payment method is selected by the operation on the payment method selection screen SDa or the payment method selection screen SCb in the second embodiment. Note that steps of information processing common to the second information processing in the first embodiment illustrated in FIG. 7 are denoted by the same signs and detailed explanation of the steps is omitted.

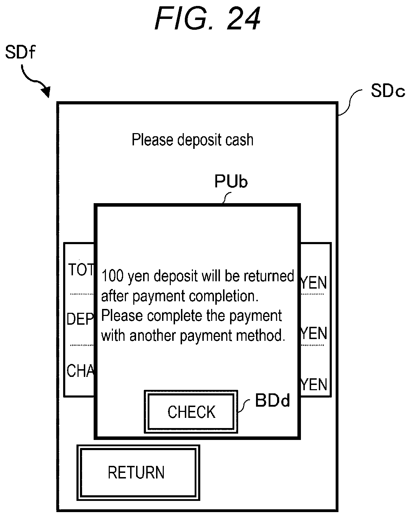

As it is evident if FIGS. 7 and 23 are compared, the second embodiment is different from the first embodiment in processing after the processing in ACT 36. That is, if the return button BDb of the payment support screen SDc is operated after cash is deposited to the automatic change machine 36, in ACT 36, the processor 61 stores a deposit amount in the deposit memory 85 and thereafter proceeds to ACT 51. In ACT 51, the processor 61 sets the screen of the first touch panel 32 to be the total screen SCa (see FIG. 13) and sets the screen of the second touch panel 34 to be a repayment check screen SDf (see FIG. 24).

FIG. 24 is an example of the repayment check screen SDf displayed on the second touch panel 34. In the repayment check screen SDf, a pop-up window PUb is displayed over the payment support screen SDc. The pop-up window PUb displays text for informing that cash deposited to the automatic change machine 36 will not be repaid until the price is paid by a price payment method selected after a payment suspension instruction has been received. A check button BDd is disposed in the pop-up window PUb. The check button BDd is a software key. The customer touches the check button BDd to confirm/acknowledge the message in the pop-up window PUb.

The processor 61 then proceeds to ACT 52. In ACT 52, the processor 61 waits for the check button BDd to be touched. If the check button BDd is touched, the processor 61 proceeds from ACT 52 to ACT 37. Thereafter, the processor 61 executes the information processing in ACT 37 and subsequent acts in the same manner as in the first embodiment.

The processor 61 implements the function of the informing unit 95 according to the processing in ACT 51.

### [Explanation of effects of the settlement device]

For example, if a customer of a transaction, a settlement amount of which is a price 1,230 yen of a purchase commodity, operates the payment method selection screen SDa displayed on the second touch panel 34 and selects cash as a price payment method, the screen of the second touch panel 34 transitions from the payment method selection screen SDa to the payment support screen SDc. Here, if the customer touches the return button BDb of the payment support screen SDc after depositing a 100-yen coin to the automatic change machine 36, the screen of the second touch panel 34 transitions from the payment support screen SDc to the repayment check screen SDf. At this time, the 100-yen coin deposited by the customer is not repaid from the automatic change machine 36. 100 yen is stored in the deposit memory 85 as a deposit amount.

If the customer touches the check button BDd of the repayment check screen SDf, the screen of the second touch panel 34 returns from the repayment check screen SDf to the payment method selection screen SDa. At this time, the 100-yen coin deposited by the customer is not repaid immediately from the automatic change machine 36. The 100-yen coin is repaid from the automatic change machine 36 after a payment method other than the cash has been selected and the price is paid by the newly selected payment method. Therefore, in the second embodiment, it is possible to prevent a fraudulent act of the customer making cash dispensed by the automatic change machine look as if change is dispensed and leaving without settling a transaction.

Moreover, according to the second embodiment, if the customer touches the return button BDb of the payment support screen SDc, the screen of the second touch panel 34 transitions from the payment support screen SDc to the repayment check screen SDf. On the repayment check screen SDf, text is displayed for informing that the cash deposited to the automatic change machine 36 will not be repaid until the price is paid by a price payment method selected after the payment suspension instruction. Therefore, since the customer can recognize that the cash deposited to the automatic change machine 36 will not be repaid right after the return button BDb is touched, the customer can change the payment method from the cash to another payment method at ease.

### [Third Embodiment]

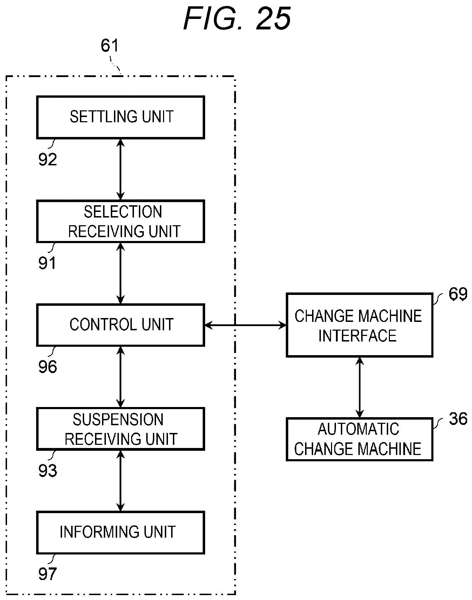

A third embodiment is explained with reference to FIGS. 25 to 28.

Note that, in the third embodiment, since explanation of a configuration of the commodity sales system 1 and explanation of a configuration of the settlement device 3 are the same as the explanation in the first embodiment, FIGS. 1 and 2 are referred to as they are and the explanation is omitted here.

### [Explanation of functions of the settlement device]

FIG. 25 is a block diagram illustrating certain functional aspects of the processor 61 of the settlement device 3. As illustrated in FIG. 25, the processor 61 provides functions of a control unit 96 and an informing unit 97 in addition to the selection receiving unit 91, the settling unit 92, and the suspension receiving unit 93 explained in the first embodiment.

The control unit 96 controls the automatic change machine 36 via the change machine interface 69, which is a communication means. That is, the control unit 96 controls the automatic change machine 36 not to immediately repay previously deposited cash/coins when a payment suspension instruction is received by the suspension receiving unit 93. The cash deposited into the automatic change machine 36 is repaid after a price payment method other than cash is selected after the payment suspension instruction was received.

The informing unit 97, when the payment suspension instruction is received by the suspension receiving unit 93, informs that the cash deposited to the automatic change machine 36 will not be repaid until a price payment method other than the cash is selected. The informing unit 97 causes the second touch panel 34 to display that the cash deposited to the automatic change machine 36 will not be repaid until after a price payment method other than the cash is selected. For example, if the settlement device 3 includes a voice output function, the informing unit 97 may output voice indicating that cash deposited to the automatic change machine 36 will not be repaid until a price payment method other than the cash is selected.

Note that the functions of the control unit 96 and the informing unit 97 are also implemented by the information processing executed by the processor 61 according to the job program.

### [Explanation of information processing of the settlement device]

In the third embodiment, the first information processing executed by the processor 61 of the settlement device 3 is the same as the first information processing in the first embodiment. Therefore, FIG. 5 is referred to as it is and explanation of the first information processing is omitted here.

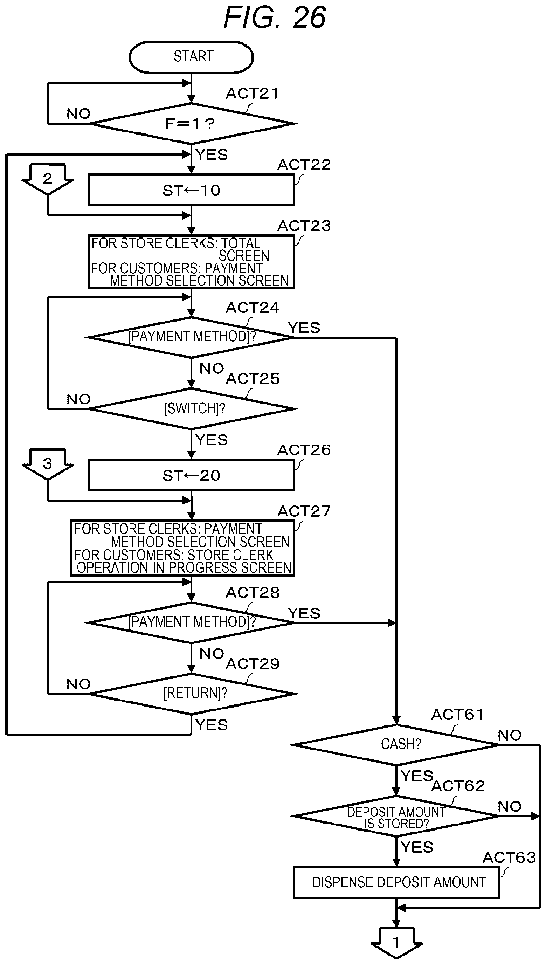

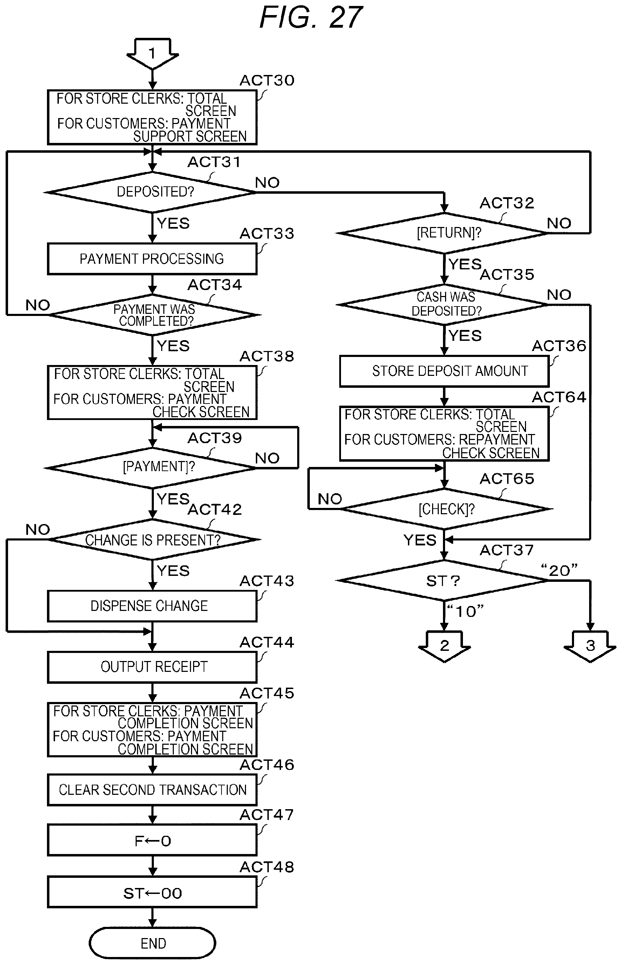

FIGS. 26 and 27 are flowcharts of second information processing executed by the processor 61 of the settlement device 3 according to a job program. Note that steps of information processing common to the second information processing in the first embodiment illustrated in FIGS. 6 and 7 are denoted by the same signs and detailed explanation of the steps is omitted.

As it is evident if FIGS. 6 and 7 are compared, one of differences of the third embodiment from the first embodiment is processing after any payment method is selected in ACT 24 or ACT 28. That is, if any payment method is selected in ACT 24 or ACT 28, the processor 61 proceeds to ACT 61. In ACT 61, the processor 61 checks whether cash was selected as a payment method. If the cash was not selected, the processor 61 proceeds from ACT 61 to ACT 30 in FIG. 27.

If the cash was selected as the payment method, the processor 61 proceeds from ACT 61 to ACT 62. In ACT 62, the processor 61 checks whether a deposit amount was stored in the deposit memory 85. If a deposit amount was not stored, the processor 61 proceeds from ACT 62 to ACT 30 in FIG. 27.

If a deposit amount was stored in the deposit memory 85, the processor 61 proceeds from ACT 62 to ACT 63. In ACT 63, the processor 61 controls the automatic change machine 36 such that cash equivalent to the deposit amount is dispensed. Thereafter, the processor 61 proceeds to ACT 30 in FIG. 27.

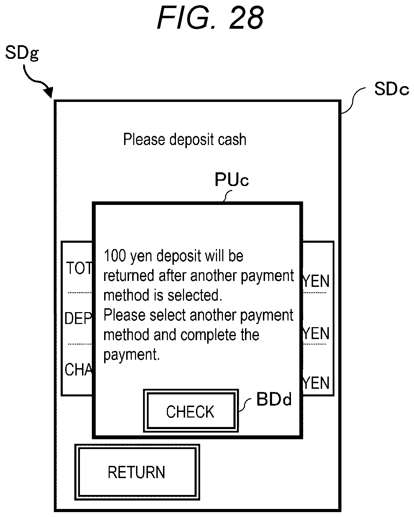

The processor 61 proceeding to ACT 30 as explained above executes substantially the same processing as the processing in ACT 30 and subsequent acts of the second information processing in the second embodiment. That is, if the return button BDb of the payment support screen SDc is operated after the cash is deposited to the automatic change machine 36, the processor 61 stores the deposit amount in the deposit memory 85 in ACT 36 and, thereafter, proceeds to ACT 64. In ACT 64, the processor 61 sets the screen of the first touch panel 32 to be the total screen SCa (see FIG. 13) and sets the screen of the second touch panel 34 to be a repayment check screen SDg (see FIG. 28).

FIG. 28 is an example of the repayment check screen SDg displayed on the second touch panel 34. In the repayment check screen SDg, a pop-up window PUc is displayed over the payment support screen SDc. The pop-up window PUc displays text for informing that cash deposited to the automatic change machine 36 will not be repaid until a price payment method other than cash is selected after a payment suspension instruction. A check button BDd is disposed in the pop-up window PUc. The check button BDd is a software key. The customer touches the check button BDd to confirm the message of the pop-up window PUc.

The processor 61 proceeds to ACT 65. In ACT 65, the processor 61 waits for the check button BDd to be touched. If the check button BDd is touched by the customer, the processor 61 proceeds from ACT 65 to ACT 37. Thereafter, the processor 61 executes the information processing in ACT 37 and subsequent acts substantially in the same manner as in the first or second embodiment.

However, in the first or second embodiment, if the payment button BDc is touched by the customer in ACT 39, the processor 61 executes the processing in ACT 40 and ACT 41. In the third embodiment, the processor 61 skips the processing in ACT 40 and ACT 41. The processor 61 proceeds from ACT 39 to ACT 42. Thereafter, the processor 61 executes the processing in ACT 42 and subsequent acts in the same manner as in the first or second embodiment.

The processor 61 implements the function of the control unit 96 according to the processing in ACT 35, ACT 36, and ACT 61and/to ACT 63. The processor 61 implements the function of the informing unit 97 according to the processing in ACT 64.

### [Explanation of action effects of the settlement device]

For example, if a customer of a transaction, a settlement amount of which is a price 1,230 yen of a purchase commodity, operates the payment method selection screen SDa displayed on the second touch panel 34 and selects cash as a price payment method, the screen of the second touch panel 34 transitions from the payment method selection screen SDa to the payment support screen SDc. Here, if the customer touches the return button BDb of the payment support screen SDc after depositing a 100-yen coin to the automatic change machine 36, the screen of the second touch panel 34 transitions from the payment support screen SDc to the repayment check screen SDg. At this time, the 100-yen coin deposited by the customer will not be repaid from the automatic change machine 36. The 100 yen value is stored in the deposit memory 85 as a deposit amount.

If the customer touches the check button BDd of the repayment check screen SDg, the screen of the second touch panel 34 returns from the repayment check screen SDf to the payment method selection screen SDa. At this time, the 100-yen coin deposited by the customer will not be repaid from the automatic change machine 36. The 100-yen coin is repaid from the automatic change machine 36 only after another payment method other than the cash is selected. Therefore, in the third embodiment, it is possible to prevent a fraudulent act of the customer making cash dispensed by the automatic change machine 36 look as if transaction change due has been dispensed and leaving without settling a transaction.

Moreover, in the third embodiment, if the customer touches the return button BDb of the payment support screen SDc, the screen of the second touch panel 34 transitions from the payment support screen SDc to the repayment check screen SDg. On the repayment check screen SDg, text is displayed for informing that the cash deposited to the automatic change machine 36 will not be repaid until another price payment method other than the cash is selected after the payment suspension instruction. Therefore, since the customer can recognize that the cash deposited to the automatic change machine 36 will not be repaid right after the return button BDb is touched, the customer can change the payment method from the cash to another payment method at ease.

### [Other embodiments]

In the first to third embodiments, if the selection receiving unit 91 receives an instruction to select any price payment method according to operation of the store clerk on the first touch panel 32 after the payment suspension instruction is received, the control unit 94 or the control unit 96 may immediately repay the cash from the automatic change machine 36. When the store clerk selects a price payment method, the store clerk faces the customer who is performing settlement. Therefore, it is more difficult for the customer to perform a fraudulent act such as leaving without settling a transaction. Therefore, there is less concern if the control unit 96 immediately repays the cash previously deposited into the automatic change machine 36.

In the third embodiment, as in the first embodiment, preventing a fraudulent act can be achieved even if the processing in ACT 64 and ACT 65 in FIG. 27 is omitted.

A settlement device is not limited to the settlement device 3 illustrated in FIG. 1. The embodiments can be applied to a settlement device at which a customer himself or herself deposits money necessary for settlement of a transaction and a settlement device adapted to a full-self service with which a customer performs, for example, information input to settlement of a purchase commodity by himself or herself.

The settlement device 3 illustrated in FIG. 1 generates, based on information concerning a purchase commodity, a commodity code and the like of which are input via the input device 2, sales data of the purchase commodity and registers the sales data. In another settlement device, the keyboard 31, the first touch panel 32, or the handy scanner 33, an operator of which is a store clerk, is used as an input device. The settlement device receives information concerning a purchase commodity such as a commodity code via the input device, generates sales data of the purchase commodity based on the information, and registers the sale data. On the other hand, a customer himself or herself pays a price necessary for settlement of a transaction by operating the second touch panel 34, the printer 35, the automatic change machine 36, or the cashless settlement terminal 37 as in the first to third embodiments. That is, the settlement device may be a settlement device called two-way POS terminal.

Besides, several embodiments of the present disclosure are explained. However, these embodiments are presented as examples and are not intended to limit the scope of the disclosure. These new embodiments can be implemented in other various forms. Various omissions, substitutions, and changes can be performed without departing from the gist of the disclosure. These embodiments and modifications thereof are included in the scope of the disclosure and included in the disclosure described in the claims and a scope of equivalents of the disclosure.

## Claims

1. A settlement device (3) for handling payments for settling customer purchase transactions, the settlement device comprising:
a first interface to communicate with a change machine (36);
a second interface to communicate with a selection receiving unit to receive an instruction to select a price payment method from a plurality of price payment methods, at least one of the plurality of price payments methods being cash payment; and
a processor configured to:
perform settlement processing for a transaction according to the selected price payment method received via the second interface from the selection receiving unit;
receive a payment suspension instruction via the second interface from the selection receiving unit to suspend the settlement processing for the transaction according to the selected price payment method; and
control the change machine via the first interface to delay, upon the payment suspension instruction being received, repaying of any cash deposited into the change machine until after another selected price payment method is received via the second interface from the selection receiving unit after the payment suspension instruction is received.

2. The settlement device according to claim 1, further comprising:
an informing unit configured to indicate to a customer that the cash deposited to the change machine will not be repaid from the change machine until the settlement processing for the transaction is completed after the payment suspension instruction is received.

3. The settlement device according to claim 1 or 2, wherein the processor is further configured to:
after the payment suspension instruction is received, output an instruction to the selection receiving unit to cause a display of an indication to a customer that the cash deposited to the change machine will not be repaid from the change machine until another price payment method is selected.

4. The settlement device according to any one of claims 1 to 3, wherein the processor is configured to delay repaying of any cash deposited into the change machine until the other selected price payment method is received via the second interface from the selection receiving unit.

5. The settlement device according to any one of claims 1 to 4, wherein the processor is further configured to:
after the payment suspension instruction is received, output an instruction to the selection receiving unit to cause a display of an indication to a customer that the cash deposited to the change machine will not be repaid from the change machine until the settlement processing for the transaction is completed.

6. The settlement device according to any one of claims 1 to 5, wherein the selection receiving unit is a touch panel display.

7. The settlement device according to any one of claims 1 to 6, further comprising:
the change machine, and
the selection receiving unit.

8. The settlement device according to any one of 1 to 7 further comprising:
a communication unit configured to communicate with the change machine.

9. A settlement method, comprising:
receiving, via a communication interface, an instruction to select a price payment method from a plurality of price payment methods, at least one of the plurality of price payments methods being cash payment;
performing settlement processing for a transaction according to the selected price payment method received via the communication interface;
receiving a payment suspension instruction via the communication interface to suspend the settlement processing for the transaction according to the selected price payment method; and
controlling a change machine to delay, upon the payment suspension instruction being received, repaying of any cash deposited into the change machine until after another selected price payment method is received via the communication interface unit after the payment suspension instruction is received.

10. The settlement method according to claim 9, further comprising:
indicating to a customer that the cash deposited to the change machine will not be repaid from the change machine until the settlement processing for the transaction has been completed after the payment suspension instruction is received.

11. The settlement method according to claim 9 or 10, further comprising:
after the payment suspension instruction is received, outputting an instruction to cause a display of an indication to a customer that the cash deposited to the change machine will not be repaid from the change machine until another price payment method is selected.

12. The settlement method according to any one of claims 9 to 11, further comprising:
indicating to a customer that the cash deposited to the change machine will not be repaid from the change machine until another selection of a price payment method is received after the payment suspension instruction is received.

13. The settlement method according to any one of claims 9 to 12, wherein the repaying of any cash deposited into the change machine is delayed until after settlement processing for the transaction is completed by another selected price payment method after the payment suspension instruction is received.

14. The settlement method according to any one of claims 9 to 13, wherein the repaying of any cash deposited into the change machine is delayed until another price payment method is selected after the payment suspension instruction is received.
